# EUROPÄISCHE PATENTSCHRIFT

(11) **EP 2 549 093 B1**
(45) Veröffentlichungstag und Bekanntmachung des Hinweises auf die Patenterteilung: **14.02.2018**
(21) Anmeldenummer: 12174601.0
(22) Anmeldetag: 02.07.2012
(51) Int. Cl.: F01M 13/02, F02M 35/022, F02M 35/10, F02M 25/06, F01M 11/08, F02M 35/04, F02M 35/08

(54) **Brennkraftmaschine**
Combustion engine
Moteur à combustion interne

(30) Priorität: 19.07.2011 DE 102011079426
(43) Veröffentlichungstag der Anmeldung: 23.01.2013
(73) Patentinhaber: MAHLE International GmbH, 70376 Stuttgart (DE)
(72) Erfinder: Enderich, Andreas, 73734 Esslingen (DE); Goerlich, Leszek, 71229 Leonberg (DE); Özkaya, Yakup, 70806 Kornwestheim (DE); Rohde, Frank, 71394 Kernen (DE); Ruppel, Stefan, 69126 Heidelberg-Emmertsgrund (DE); Sauter, Dr., Hartmut, 71272 Renningen (DE); Scheffel, Jan, 70180 Stuttgart (DE)
(74) Vertreter: BRP Renaud & Partner mbB Rechtsanwälte Patentanwälte Steuerberater

(56) Entgegenhaltungen:
- WO-A2-2008/041113
- DE-A1- 19 714 308
- DE-A1-102008 053 802
- JP-A- 2005 226 476
- JP-A- 2006 283 662
- US-A1- 2010 199 958
- US-A1- 2011 232 598

## Beschreibung

Die vorliegende Erfindung betrifft eine Brennkraftmaschine. Die Erfindung betrifft außerdem ein mit einer derartigen Brennkraftmaschine ausgestattetes Kraftfahrzeug.

Zur Verbesserung der Abgaswerte ist insbesondere ein unerwünschter Eintrag von Öl bzw. Ölnebel zusammen mit der Ladeluft in einen Zylinder zu verhindern bzw. zumindest zu minimieren. Hierzu werden in bekannter Weise Ölabscheider bzw. Ölnebelabscheider im Bereich der Kurbelgehäuseentlüftung angeordnet. Bei aufgeladenen Ottomotoren stellt jedoch auch ein Abgasturbolader eine Ölquelle dar, von der Öl unerwünscht in die verdichtete Ladeluft abgegeben wird. Dies ist insbesondere bei niedrigen Drehzahlen des Abgasturboladers der Fall, da bei diesen niedrigen Drehzahlen noch kein Sperrdruck aufgebaut ist, der den Öleintrag verhindert oder zumindest reduziert. Bei fehlendem Sperrdruck werden somit Öltröpfchen aus dem Lagergehäuse bzw. Lagerbereich des Abgasturboladers in die Luft eingetragen und dem Zylinder zusammen mit der verdichteten Luft zugeführt. Hierdurch steigt nicht nur der Ölverbrauch, sondern es werden auch die Abgaswerte zusätzlich verschlechtert.

Aus der DE 10 2006 027 358 A1 ist eine Brennkraftmaschine mit einer Ansaugleitung bekannt, wobei in Strömungsrichtung nach der Ansaugleitung ein Filterelement sowie ein Luftmassenmesser angeordnet sind. Um letzteren vor eindringendem Spritzwasser wirkungsvoll schützen zu können, hat die Ansaugleitung in ihrem tiefsten Punkt einen Ablauf, über welchen Wasser abgeführt werden kann.

Aus der DE 29 47 737 ist ein Flüssigkeitsabscheider zum Abscheiden von Flüssigkeitstropfen bekannt, die mit einem Gasstrom mitgeführt werden. Der Flüssigkeitsabscheider besteht aus einem im Querschnitt kreisförmigen Primärkanal, der Schaufeln enthält, die auf die vom Gasstrom durch den Primärkanal mitgeführten Flüssigkeitstropfen einen Wirbel aufprägen, der um die Achse des Kanals herum verläuft. Der Schaufelaufbau leitet dabei die Flüssigkeit nach den radial äußeren Abschnitten des Primärkanals derart, dass der aus den radial inneren Bereichen des Primärkanals ausgeblasene Gasstrom eine verminderte Flüssigkeitstropfenkonzentration aufweist oder vorzugsweise gänzlich von Flüssigkeitstropfen befreit ist.

JP2006283662 A betrifft eine aufgeladene Brennkraftmaschine mit einem Ölabscheider im Ansaugtrakt und mit einer Entlüftungsleitung, die stromauf des Abgasturboladers und stromab des Kurbelgehäuses angeordnet ist.

Die vorliegende Erfindung beschäftigt sich mit dem Problem, für eine Brennkraftmaschine eine verbesserte Ausführungsform anzugeben, die sich insbesondere durch einen geringeren Ölverbrauch und zugleich bessere Abgaswerte auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Brennkraftmaschine im Ansaugtrakt direkt vor einem Eingang eines Zylinders einen Ölabscheider anzuordnen und dadurch nicht nur wie bisher im Bereich einer Kurbelgehäuseentlüftung Öl- bzw. Ölnebel abzuscheiden, sondern alternativ oder zusätzlich direkt vor dem Eingang des Zylinders, das heißt im Ansaugtrakt selbst. Die Brennkraftmaschine kann dabei als aufgeladene Brennkraftmaschine ausgebildet sein und insbesondere einen Abgasturbolader aufweisen, wobei in diesem Fall der erfindungsgemäße Ölabscheider stromab des Abgasturboladers und vor dem Zylindereingang angeordnet ist. Nach einem Abgasturbolader und vor dem Eintritt des Ansaugtrakts in einen Zylinder einen Ölabscheider, insbesondere einen Ölnebelabscheider, anzuordnen, der speziell das unerwünscht aus dem Abgasturbolader austretende Öl abscheidet und dadurch den Ölverbrauch reduziert sowie die Emissionswerte senkt. Selbstverständlich kann dabei zusätzlich ein weiterer Ölabscheider zwischen dem Zylinder und dem Abgasturbolader in bekannter Weise angeordnet werden. Das Vorsehen des erfindungsgemäßen Ölabscheiders zwischen dem Abgasturbolader und dem Zylinder bietet insbesondere die Möglichkeit, das bei geringen Drehzahlen aufgrund des fehlenden Sperrdrucks aus dem Lagerbereich des Abgasturboladers unerwünscht austretende Öl, das in Tröpfchenform vom verdichteten Ladeluftstrom mitgerissen wird, vor einem Eintritt in den Zylinder abzuscheiden und einem Ölreservoir wieder zuzuführen. Zugleich können die beispielsweise im Bereich der Kurbelgehäuseentlüftung nicht abgeschiedenen Ölnebeltröpfchen vom erfindungsgemäß vor dem Eingang des Zylinders angeordneten Ölabscheider abgeschieden werden, so dass vorzugsweise ausschließlich ölnebelfreie Ladeluft dem Verbrennungsprozess zugeführt wird. Mit dem erfindungsgemäßen Ölabscheider können somit Öltröpfchen nicht nur aus dem Abgasturbolader, sondern auch aus dem Kurbelgehäuse abgeschieden werden, sofern diese vom Ladeluftstrom mitgeführt sind. Die Verbesserung der Ölabscheidung ist insbesondere für hochaufgeladene Brennkraftmaschinen von großem Vorteil, da sich mit steigenden Ladedrücken die Neigung zur Vorentflammung erhöht.

Bei einer vorteilhaften Weiterbildung der erfindungsgemäßen Lösung ist zumindest ein Ölabscheider als Zentrifugalölnebelabscheider ausgebildet und bewirkt somit das Abscheiden der im Ladeluftstrom mitgeführten Öltröpfchen durch eine Zentrifugalbeschleunigung, aufgrund welcher sich die Ölnebeltröpfchen an einer Wandung des Ölabscheiders niederschlagen und von dort in einen Sumpf bzw. in das Ölreservoir zurückgeführt werden können. Das stromab des Abgasturboladers abzuscheidende Öl bzw. die dort abzuscheidenden Öltröpfchen können dabei sowohl vom Abgasturbolader selbst, das heißt aus einem Lagerbereich desselben, stammen, als auch aus dem Kurbelgehäuse, sofern der stromab des Kurbelgehäuses und stromauf des Abgasturboladers angeordnete weitere Ölabscheider diese nicht abgeschieden hat. Zentrifugalölnebelabscheider sind darüber hinaus einerseits kostengünstig herzustellen und andererseits höchst effizient und können zudem mit vergleichsweise kleinem Bauraum realisiert und dadurch optimal in modernen, engen Motorräumen angeordnet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Brennkraftmaschine,
- Fig. 2a bis c: unterschiedliche Ausführungsformen unterschiedlicher möglicher Ölabscheider.

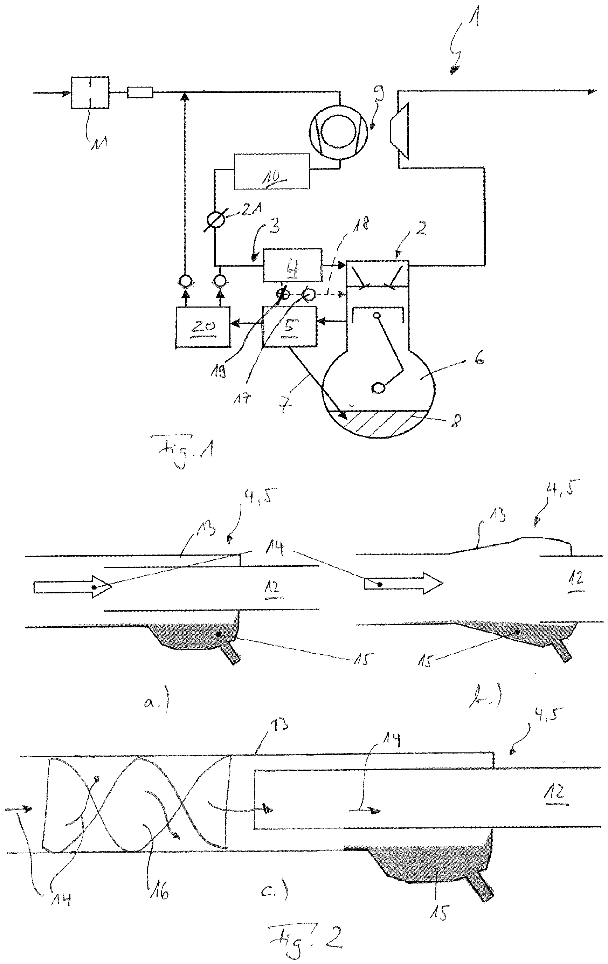

Entsprechend der Fig. 1, weist eine erfindungsgemäße Brennkraftmaschine 1 einen Zylinder 2 auf, wobei in einem Ansaugtrakt 3 direkt vor dem Zylinder 2 erfindungsgemäß ein Ölabscheider 4, insbesondere ein Ölnebelabscheider, angeordnet ist. Der Ölabscheider 4 ist dabei zusätzlich zu einem weiteren Ölabscheider 5 vorgesehen, der die aus einem Kurbelgehäuse 6 stammenden Öltröpfchen im Rahmen einer Kurbelgehäuseentlüftung abscheidet. Das im weiteren Ölabscheider 5 abgeschiedene Öl kann über eine entsprechende Rücklaufleitung 7 einem Ölreservoir 8, beispielsweise einem Ölsumpf, zugeführt werden. Betrachtet man die Fig. 1 näher, so kann man erkennen, dass es sich bei der Brennkraftmaschine 1 um eine aufgeladene Brennkraftmaschine mit einem Abgasturbolader 9 handelt, der dem Zylinder 2 verdichtete Ladeluft zuführt. Hierbei befindet sich stromauf des Abgasturboladers 9 ein Niederdruckbereich. Im Bereich nach dem Turbolader 9 befindet sich ein Hochdruckbereich. Im Ansaugtrakt 3 ist dabei der erfindungsgemäße Ölabscheider 4 zwischen dem Abgasturbolader 9 und dem Zylinder 2 angeordnet und dadurch in der Lage, unerwünscht im Bereich des Abgasturboladers 9 austretendes Öl vor Eintritt in den Zylinder 2 abzuscheiden. Insbesondere bei niedrigen Drehzahlen kann es vorkommen, dass Öl unerwünschter Weise aus dem Lagerbereich des Abgasturboladers 9 in den Ansaugtrakt 3 gelangt und von dort in den Zylinder 2, wobei es insbesondere im Volllastbereich zu einer unerwünschten und unkontrollierbaren Selbstzündung kommen kann. Der direkt, insbesondere ohne weitere Funktionsbauteile, vor dem Zylindereingang angeordnete Ölabscheider 4 reduziert oder eliminiert die in den Zylinder 2 gelangende Ölfracht, wodurch die vorher beschriebenen Probleme, insbesondere durch unkontrolliertes Selbstzünden, unterbunden werden können. Dieses abgeschiedene Öl kann durch eine entsprechende Leitung 18 aus dem Ölabscheider 4 ausgetragen werden. Insbesondere kann diese Leitung 18 mit dem Ölreservoir 8 des Kurbelgehäuses 6 verbunden sein. Der Ölabscheider 4 verfügt vorzugsweise über ein Rückschlagventil 17, welches insbesondere in der Leitung 18 angeordnet ist. Somit kann das Öl bei entsprechenden Druckverhältnissen ablaufen. Weiterhin ist es vorteilhaft, wenn in der Leitung 18 ein Drosselorgan 19 vorgesehen ist, um bei Volllast die Frischluftmenge zu begrenzen.

Im Ansaugtrakt 3 kann zwischen dem Abgasturbolader 9 und dem Zylinder 2 zusätzlich noch ein Ladeluftkühler 10 angeordnet sein, wobei der Ölabscheider 4 stromab des Ladeluftkühlers 10 angeordnet ist. Zur Regelung der dem Zylinder 2 zugeführten Frischluft ist nach dem Ladeluftkühler 10 eine Drossel 21 vorgesehen. Bei anderen Ausgestaltungen könnte diese Drossel 21 auch vor dem Ladeluftkühler oder nach dem Ölabscheider 4 angeordnet sein. Zur Regelung der Druckverhältnisse im Ansaugtrakt ist ein Druckregelventil 20 vorgesehen, welches sowohl mit der Niederdruckseite, als auch mit der Hochdruckseite des Abgasturboladers 9 verbunden ist. Weiterhin ist der Abscheider 5 mit dem Druckregelventil 20 verbunden.

Betrachtet man die Fig. 2a so kann man erkennen, dass der Ölabscheider 4, 5 beispielsweise als Wandfilmölabscheider ausgebildet ist, wogegen er gemäß der Fig. 2c beispielsweise als Zentrifugalölnebelabscheider ausgebildet ist. Das im Ölabscheider 4, 5 abgeschiedene Öl wird vorzugsweise dem Ölreservoir 8 zugeführt und dadurch rückgewonnen, wodurch nicht nur der Ölverbrauch der erfindungsgemäßen Brennkraftmaschine 1 reduziert, sondern auch deren Emissionswerte verbessert werden können. Stromauf des Abgasturboladers 9 kann in gewohnter Weise selbstverständlich noch ein Luftfilter 11 angeordnet sein.

Die Ölabscheider 4, 5 gemäß den Fig. 2a bis 2c besitzen üblicherweise ein Primärrohr 12, welches von einem Sekundärrohr 13 umgriffen ist. Durch das im Durchmesser vergleichsweise größere Sekundärrohr 13 scheidet sich im Überlappungsbereich der beiden Rohre 12, 13 Ölnebel ab, wobei die von Ölnebel gereinigte Luft wie mit dem Pfeil 14 dargestellt zuerst durch das Sekundärrohr 13 und anschließend durch das Primärrohr 12 in Richtung des Zylinders 2 strömt. Im Überlappungsbereich der beiden Rohre 12, 13 ist zudem ein Ölspeicher 15 vorgesehen, in welchem sich abgeschiedenes Öl ansammeln und gegebenenfalls, beispielsweise temporär, zum Ölreservoir 8 rückgeführt werden kann. Im Ölabscheider 4, 5 gemäß der Fig. 2c ist zudem ein Leitelement 16 (Zentrifuge) vorgesehen, das die strömende Ladeluft in eine rotierende Strömungsbewegung umlenkt und dadurch den in dieser aerosol gelösten Ölnebel aufgrund der Zentrifugalkräfte an einer Innenwandung des Sekundärrohrs 13 ablagert, von wo der Ölnebel dann in den Ölspeicher 15 abfließen kann.

Mit der erfindungsgemäßen Brennkraftmaschine 1 ist eine besonders hohe Reinigungswirkung möglich, so dass die dem Zylinder 2 zugeführte Ladeluft vorzugsweise ölnebenfrei ist. Bewirkt wird dies durch den erfindungsgemäß im Ansaugtrakt 3 angeordneten Ölabscheider 4, der insbesondere zusätzlich zum weiteren Ölabscheider 5 angeordnet ist. Durch den im Ansaugtrakt 3 angeordneten Ölabscheider 4 kann darüber hinaus das erst im Bereich des Abgasturboladers 9 in den Ladeluftstrom gelangende Öl abgeschieden werden. Hierdurch lassen sich sowohl der Ölverbrauch als auch die Emissionswerte der Brennkraftmaschine 1 reduzieren.

## Patentansprüche

1. Brennkraftmaschine (1) mit zumindest einem Zylinder (2),
- wobei im Ansaugtrakt (3) vor dem wenigstens einen Zylinder (2) ein Ölabscheider (4), insbesondere ein Ölnebelabscheider, angeordnet ist,
- wobei zumindest ein Abgasturbolader (9) vorgesehen ist, der dem Zylinder (2) verdichtete Ladeluft zuführt, und
- wobei der Ölabscheider (4), insbesondere der Ölnebelabscheider, im Ansaugtrakt (3) zwischen dem Abgasturbolader (9) und dem wenigstens einen Zylinder (2) angeordnet ist,
**dadurch gekennzeichnet, dass**
- stromauf des Abgasturboladers (9) und stromab des Kurbelgehäuses (6) ein weiterer Ölabscheider (5) angeordnet ist,
- der weitere Ölabscheider (5) über eine Rücklaufleitung (7) mit einem Ölreservoir (8) zur Rückführung von abgeschiedenem Öl verbunden ist.

2. Brennkraftmaschine nach Anspruch 1,
**dadurch gekennzeichnet,**
**dass** im Ansaugtrakt (3) zwischen dem Abgasturbolader (9) und dem Zylinder (2) ein Ladeluftkühler (10) angeordnet ist.

3. Brennkraftmaschine nach Anspruch 2,
**dadurch gekennzeichnet,**
**dass** der Ölabscheider (4) stromab des Ladeluftkühlers (10) angeordnet ist.

4. Brennkraftmaschine nach einem der Ansprüche 1 bis 3,
**dadurch gekennzeichnet,**
**dass** zumindest ein Ölabscheider (4,5) als Zentrifugalölnebelabscheider ausgebildet ist.

5. Brennkraftmaschine nach einem der Ansprüche 1 bis 4,
**dadurch gekennzeichnet,**
**dass** zumindest ein Ölabscheider (4,5) als Wandfilmölnebelabscheider ausgebildet ist.

6. Brennkraftmaschine nach einem der Ansprüche 1 bis 5,
**dadurch gekennzeichnet,**
**dass** der Ölabscheider (4) über ein Rückschlagventil (17) verfügt, welches insbesondere mit einem Drosselorgan (19) in Reihe geschaltet ist.

7. Kraftfahrzeug mit einer Brennkraftmaschine (1) nach einem der Ansprüche 1 bis 6.

## Claims

1. Internal combustion engine (1) with at least one cylinder (2),
- wherein an oil separator (4), in particular an oil mist separator, is arranged before the at least one cylinder (2) in the air intake (3),
- wherein at least one turbocharger (9) is provided which supplies compressed charge air to the cylinder (2), and
- wherein the oil separator (4), in particular the oil mist separator, is arranged between the turbocharger (9) and the at least one cylinder (2) in the air intake (3),
**characterised in that**
- an additional oil separator (5) is arranged upstream of the turbocharger (9) and downstream of the crankcase (6),
- the additional oil separator (5) is connected to an oil reservoir (8) via a return line (7) for returning separated oil.

2. Internal combustion engine according to claim 1,
**characterised in that**
an intercooler (10) is arranged between the turbocharger (9) and the cylinder (2) in the air intake (3).

3. Internal combustion engine according to claim 2,
**characterised in that**
the oil separator (4) is arranged downstream of the intercooler (10).

4. Internal combustion engine according to any of claims 1 to 3,
**characterised in that**
at least one oil separator (4, 5) is formed as a centrifugal oil mist separator.

5. Internal combustion engine according to any of claims 1 to 4,
**characterised in that**
at least one oil separator (4, 5) is formed as a centrifugal oil mist separator.

6. Internal combustion engine according to any of claims 1 to 5,
**characterised in that**
the oil separator (4) comprises a lift check valve (17) which is in particular switched in series with a throttle element (19).

7. Motor vehicle with an internal combustion engine (1) according to any of claims 1 to 6.

## Revendications

1. Moteur à combustion interne (1) avec au moins un cylindre (2),
- dans lequel dans le conduit d'admission (3) avant l'au moins un cylindre (2), un séparateur d'huile (4), en particulier un séparateur de vapeur d'huile, est agencé,
- dans lequel au moins un turbocompresseur à gaz d'échappement (9) est prévu, lequel fournit au cylindre (2) de l'air de suralimentation compressé, et
- dans lequel le séparateur d'huile (4), en particulier le séparateur de vapeur d'huile, est agencé dans le conduit d'admission (3) entre le turbocompresseur à gaz d'échappement (9) et l'au moins un cylindre (2),
**caractérisé en ce que**
- en amont du turbocompresseur à gaz d'échappement (9) et en aval du carter de vilebrequin (6) un autre séparateur d'huile (5) est agencé,
- l'autre séparateur d'huile (5) est relié par l'intermédiaire d'une conduite de retour (7) à un réservoir d'huile (8) pour le retour de l'huile séparée.

2. Moteur à combustion interne selon la revendication 1,
**caractérisé en ce**
**que** dans le conduit d'admission (3) entre le turbocompresseur à gaz d'échappement (9) et le cylindre (2) est agencé un refroidisseur d'air de suralimentation (10).

3. Moteur à combustion interne selon la revendication 2,
**caractérisé en ce**
**que** le séparateur d'huile (4) est agencé en aval du refroidisseur d'air de suralimentation (10).

4. Moteur à combustion interne selon l'une quelconque des revendications 1 à 3, **caractérisé en ce**
**qu'**au moins un séparateur d'huile (4, 5) est réalisé comme un séparateur de vapeur d'huile centrifuge.

5. Moteur à combustion interne selon l'une quelconque des revendications 1 à 4, **caractérisé en ce**
**qu'**au moins un séparateur d'huile (4, 5) est réalisé comme séparateur de vapeur d'huile de film de paroi.

6. Moteur à combustion interne selon l'une quelconque des revendications 1 à 5, **caractérisé en ce**
**que** le séparateur d'huile (4) dispose d'un clapet antiretour (17) qui est monté en série en particulier avec un organe d'étranglement (19).

7. Véhicule automobile avec un moteur à combustion interne (1) selon l'une quelconque des revendications 1 à 6.
